**Europäisches Patentamt**

**European Patent Office**

**Office européen des brevets**

(19)

(11) Veröffentlichungsnummer: **0 330 029 B1**

(12) # EUROPÄISCHE PATENTSCHRIFT

(45) Veröffentlichungstag der Patentschrift :
**27.12.91 Patentblatt 91/52**

(51) Int. Cl.$^5$ : **F16M 11/04**

(21) Anmeldenummer : **89102386.3**

(22) Anmeldetag : **11.02.89**

(54) **Aufhängevorrichtung für Steuergeräte.**

(30) Priorität : **22.02.88 DE 3805424**

(43) Veröffentlichungstag der Anmeldung :
**30.08.89 Patentblatt 89/35**

(45) Bekanntmachung des Hinweises auf die
Patenterteilung :
**27.12.91 Patentblatt 91/52**

(84) Benannte Vertragsstaaten :
**AT BE CH DE ES FR GB GR IT LI LU NL SE**

(56) Entgegenhaltungen :
**EP-A- 0 058 540**
**DE-A- 3 034 013**
**US-A- 1 551 332**
**US-A- 3 771 226**
**US-A- 3 942 751**

(73) Patentinhaber : **Rittal-Werk Rudolf Loh GmbH
& Co. KG
Auf dem Stützelberg
W-6348 Herborn (DE)**

(72) Erfinder : **Reuter, Wolfgang
Dorfstrasse 16
W-5909 Burbach-Würgendorf (DE)**
Erfinder : **Debus, Jürgen
Am Ebersbach 50
W-6344 Dietzhölztal 1 (DE)**
Erfinder : **Lehr, Lothar
Dresselndorfer Strasse 16
W-5909 Burbach-Oberdresselndorf (DE)**

(74) Vertreter : **Vogel, Georg
Pat.-Ing. Georg Vogel Hermann-Essig-Strasse
35
W-7141 Schwieberdingen (DE)**

## Beschreibung

Die Erfindung betrifft eine Aufhängevorrichtung für Steuergeräte, die aus einem mit einer Wand oder einem Maschinenkörper verbindbaren Anschlußflansch oder Anschlußdrehgelenk, Tragarmabschnitten, Winkeln, Zwischengelenken und einer mit dem Steuergerät verbindbaren Kupplung zusammensetzbar ist, bei der die Tragarmabschnitte aus einem im wesentlichen U-förmigen Grund-Profilabschnitt und einem diesen verschließenden Deckelprofilabschnitt bestehen, wobei der Grund-Profilabschnitt mittels eines zu seinem Steg parallel verlaufenden Trennsteges in ein als geschlossenes Hohlprofil ausgebildetes Tragteil und ein dem Steg abgekehrt offenes U-förmiges Aufnahmeteil unterteilt ist, und bei der im Tragteil und im Aufnahmeteil längsgerichtete, durchgehende Verbindungsstege mit Schraubaufnahmen angeformt sind.

Mit dem Anschlußdrehgelenk, den Zwischengelenken und der Kupplung wird eine universelle Verschwenkbarkeit des am Ende der Aufhängevorrichtung angebrachten Steuergerätes erreicht. Mit den Zwischengelenken werden zwei aufeinanderstoßende Tragarmabschnitte schwenkbar miteinander verbunden.

Bei herkömmlichen Aufhängevorrichtungen der eingangs genannten Art, wie sie z.B. in der DE-A-3034013 beschrieben sind, sind die miteinander gelenkig verbundenen Tragabschnitte über ein Drehlager verbunden, dessen Drehachse etwa senkrecht zu den Längsmittelachsen der Tragabschnitte verläuft. In diesem Drehlager sind auch die Anschlußkabel geführt, und zwar seitlich von der Drehachse des Drehlagers, was zur Folge hat, daß die Anschlußkabel beim Verschwenken der Tragabschnitte gegeneinander bewegt und unterschiedlich beansprucht werden. Dies kann zur Beschädigung der Anschlußkabel führen. Ein weiterer Nachteil, mit dem die bekannte Aufhängevorrichtung behaftet ist, besteht darin, daß das Einbringen von Verbindungsleitungen im Bereich des Drehlagers zeitaufwendig und schwierig ist.

Es ist Aufgabe der Erfindung, für eine Aufhängevorrichtung der eingangs erwähnten Art ein Zwischengelenk zu schaffen, das im Aufbau sehr einfach ist und aufeinanderstoßende Tragarmabschnitte so starr miteinander verbindet, daß es große Belastungen abfangen kann, ohne das Einbringen von Verbindungsleitungen im Bereich des Zwischengelenkes zu erschweren und auf eine Abdeckung der Verbindungsleitungen im Bereich des Zwischengelenkes verzichten zu müssen.

Diese Aufgabe wird nach der Erfindung dadurch gelöst, daß die Zwischengelenke aus zwei Befestigungsplatten bestehen, die zumindest den Querschnitt der Aufnahmeteile der Grund-Profilabschnitte im wesentlichen frei lassen und mit Bohrungen für Befestigungsschrauben versehen sind, die auf die Verteilung der Schraubaufnahmen in den Verbindungsstegen der Grund-Profilabschnitte der aufeinander stoßenden Tragarmabschnitte ausgerichtet sind, daß an den den Stirnseiten des Grund-Profilabschnittes zugekehrten Seiten der Befestigungsplatten senkrecht abstehende Führungsplatten angeformt sind, die in das Tragteil und das Aufnahmeteil der Grund-Profilabschnitte einführbar sind und sich darin abstützen, daß an den einander zugekehrten Seiten der Befestigungsplatten jeweils zwei beabstandete Lagerlaschen senkrecht abstehend angeformt sind, die um die Dicke der Lagerlaschen gegeneinander versetzt und mit fluchtenden Lagerbohrungen zur Aufnahme von Lagerbolzen oder Lagerelementen versehen sind, und daß das Zwischengelenk mittels eines Faltenbalges abgedeckt ist, der an den mittels Deckelprofilabschnitten verschlossenen Grund-Profilabschnitten der aufeinanderstoßenden Tragarmabschnitten festgelegt ist.

Die Befestigungsplatten sind Teil der beiden Gelenkteile und lassen sich auf einfache Weise starr mit den Stirnseiten der Grund-Profilabschnitte verschrauben. Da der Querschnitt der Aufnahmeteile der aufeinanderstoßenden Tragarmabschnitte im wesentlichen frei bleibt, können die Verbindungsleitungen von dem einen Tragarmabschnitt über das Zwischengelenk hinweg ohne Beeinträchtigung in den anderen Tragarmabschnitt geführt werden. Die Führungsplatten geben dabei eine zusätzliche Abstützung der Grund-Profilabschnitte an den Gelenkteilen und über die Lagerlaschen läßt sich die drehbare Lagerung der beiden Gelenkteile erreichen, ohne die Führung der Verbindungsleitungen über das Zwischengelenk zu beeinträchtigen. Der Faltenbalg deckt das Zwischengelenk mit den darüber hinweggeführten Verbindungsleitungen ab.

Die Abstützung der Gelenkteile in den Grund-Profilabschnitten läßt sich nach einer Ausgestaltung dadurch noch verbessern, daß sich jeweils eine Führungsplatte der Befestigungsplatten auf der Innenwandung des Steges des zugekehrten Grund-Profilabschnittes abstützt und mit seitlichen Abkantungen versehen ist, die sich an die Innenwandungen der Seitenschenkelabschnitte des Tragteils anlegen.

Ist nach einer Ausgestaltung vorgesehen, daß sich jeweils eine Führungsplatte der Befestigungsplatten im Aufnahmeteil auf dem Trennsteg des zugeordneten Grund-Profilabschnittes als Stellplatte abstützt und mit einer Gewindebohrung für eine Stellschraube versehen ist, die sich auf dem Trennsteg abstützt, und daß die den Stirnseiten der Grund-Profilabschnitte zugekehrten Seiten der Befestigungsplatten leicht zur abgekehrten Seite derselben hin geneigt sind, wobei der Neigungswinkel zwischen der Stirnseite des Grund-Profilabschnittes und der zugekehrten Befestigungsfläche der zugeordneten Befestigungsplatte jeweils zur offenen Seite des Aufnahmeteils des Tragarmabschnittes hin offen ist, dann lassen sich die Tragarmabschnitte am Zwischengelenk ausrichten und selbst bei Belastung in eine gemeinsame Horizontal- oder Vertikalebene einstellen.

Zur Verbesserung der Abstützung der Tragarmabschnitte am Zwischengelenk ist nach einer weiteren Ausgestaltung vorgesehen, daß an den Befestigungsplatten auf der den Stirnseiten der Grund-Profilabschnitte zugekehrten Seiten zusätzlich Stützansätze angeformt sind, auf denen sich die Stege der Grund-Profilabschnitte mit ihren Außenwandungen abstützen.

Damit das Zwischengelenk eine Einheit darstellt, ist vorgesehen, daß zumindest ein Paar von Lagerlaschen mittels eines Lagerelementes drehbar, jedoch unlösbar miteinander verbindbar bzw. verbunden sind. Die vereinfachte Drehlagerung kann an dem einen Paar von Lagerlaschen dadurch erreicht werden, daß bei einem Paar von Lagerlaschen ein an der einen Lagerlasche angeformter Lagerbolzen in eine Lagerbohrung der anderen Lagerlasche eingeführt und darin drehbar gelagert ist.

Ist nach einer Ausgestaltung vorgesehen, daß die Lagerlaschen parallel zu den Führungsplatten ausgerichtet sind, dann sind bei horizontal ausgerichteten Tragarmabschnitten die Aufnahmeteile der Grund-Profilabschnitte nach oben gerichtet, so daß das Einbringen der Verbindungsleitungen besonders einfach ist.

Die Befestigungsplatten können auch mit den in dem Aufnahmeteil angeformten Verbindungsstegen verbunden werden, wenn vorgesehen ist, daß die über die als Stellplatten dienenden Führungsplatten vorstehenden Bereiche der Befestigungsplatten mittig ausgespart sind, ohne daß dadurch das Führen der Verbindungsleitungen über das Zwischengelenk hinweg nennenswert beeinträchtigt wird.

Auch im Bereich der Drehlagerung der Gelenkteile wird das Führen der Verbindungsleitungen kaum beeinträchtigt, wenn vorgesehen ist, daß bei einer Befestigungsplatte die als Stellplatte dienende Führungsplatte und die eine der beiden Lagerlaschen in einer Ebene angeordnet sind und daß bei der anderen Befestigungsplatte die als Stellplatte dienende Führungsplatte in derselben Ebene angeordnet ist, während die der Lagerlasche der einen Befestigungsplatte zugeordnete Lagerlasche um die Dicke der Lagerlasche in Richtung zu dem im Bereich der Tragteile angeordneten Paar von Lagerlaschen versetzt ist, dann lassen sich die Gelenkteile auf die Enden der Grund-Profilabschnitte eindeutig ausgerichtet aufstecken, so daß die Befestigungsschrauben leicht eingeschraubt werden können.

Werden in den Tragteilen der Grund-Profilabschnitte zusätzliche Verbindungsleitungen aufgenommen, dann lassen sich diese auch über das Zwischengelenk einfädeln, wenn vorgesehen ist, daß die Befestigungsplatten zwischen den beiden Lagerlaschen mit einer mittigen Aussparung versehen sind, die auf den Aufnahmeraum des Tragteils des Grund-Profilabschnittes ausgerichtet ist.

Die Gelenkteile aus Befestigungsplatte, Führungsplatten, Stützansätzen und Lagerlaschen lassen sich einfach und preisgünstig einstückig als Metall-Gußteil oder Metall-Spritzgußteil herstellen.

Eine weitere vorteilhafte Ausgestaltung des Gegenstandes nach Anspruch 1 ergibt sich aus den Merkmalen des Anspruches 10.

Die Erfindung wird anhand eines in den Zeichnungen dargestellten Ausführungsbeispiels näher erläutert. Es zeigt:

Fig.1 in perspektivischer Ansicht eine komplette Aufhängevorrichtung und

Fig. 2 in Explosionsdarstellung die beiden drehbar miteinander verbundenen Gelenkteile des Zwischengelenkes mit den beiden aufeinander stoßenden und gelenkig miteinander zu verbindenden Grund-Profilabschnitte (ohne Deckelprofilabschnitte) der Tragarmabschnitte.

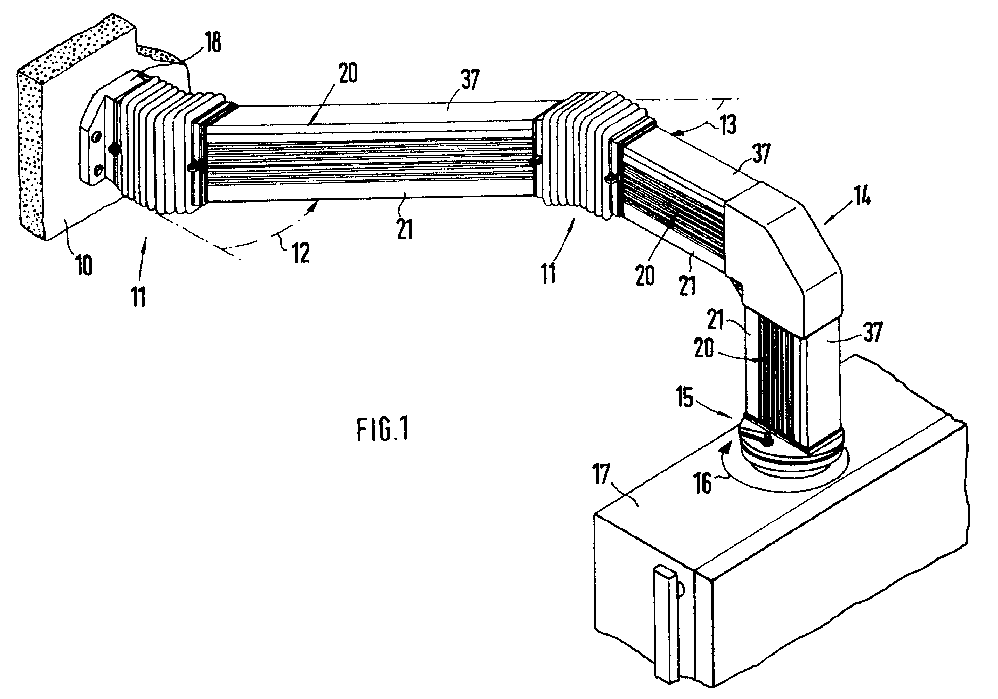

Mit 10 ist in Fig. 1 eine Wand oder ein Maschinenkörper angegeben, an der bzw. dem die als Tragarm ausgebildete Aufhängevorrichtung angebracht ist. Der Anschlußflansch 18 ist mit dem Teil 10 verbunden. Daran schließt sich ein Zwischengelenk 11 an, das mittels eines Faltenbalges abgedeckt ist. Der Anschlußflansch 18 und das Zwischengelenk 11 können auch als ein Anschlußdrehgelenk ausgebildet sein und eine Einheit darstellen. Daran schließt sich der erste horizontal ausgerichtete Tragarmabschnitt 20 an, der aus einem Grund-Profilabschnitt 21 und einem Deckelprofilabschnitt 37 besteht. Der Tragarmabschnitt 20 ist an dem Anschlußdrehgelenk verschwenkbar, wie der Schwenkwinkel 12 andeutet. An den Tragarmabschnitt 20 schließt sich über das mittels Faltenbalg abgedeckte Zwischengelenk 11 ein weiterer horizontaler Tragarmabschnitt 20 an, der schließlich über den Winkel 14 mit dem vertikalen Tragarmabschnitt 20 verbunden ist. Der Schwenkwinkel 13 deutet an, daß die beiden horizontalen Tragarmabschnitte 20 gegeneinander verschwenkbar sind. Das untere Ende des vertikalen Tragarmabschnittes 20 ist mit der Kupplung 15 verbunden, die das Steuergerät 17 trägt. Über die Kupplung 15 ist das Steuergerät 17 an dem vertikalen Tragarmabschnitt 20 verdrehbar, wie der Schwenkkreis 16 zeigt. Die Aufhängevorrichtung nach Fig. 1 stellt nur ein Ausführungsbeispiel dar. Die Tragarmabschnitte 20 haben unterschiedliche Länge. Die einzelnen Teile können auch in anderer Reihenfolge zu einer anderen Aufhängevorrichtung zusammengebaut sein.

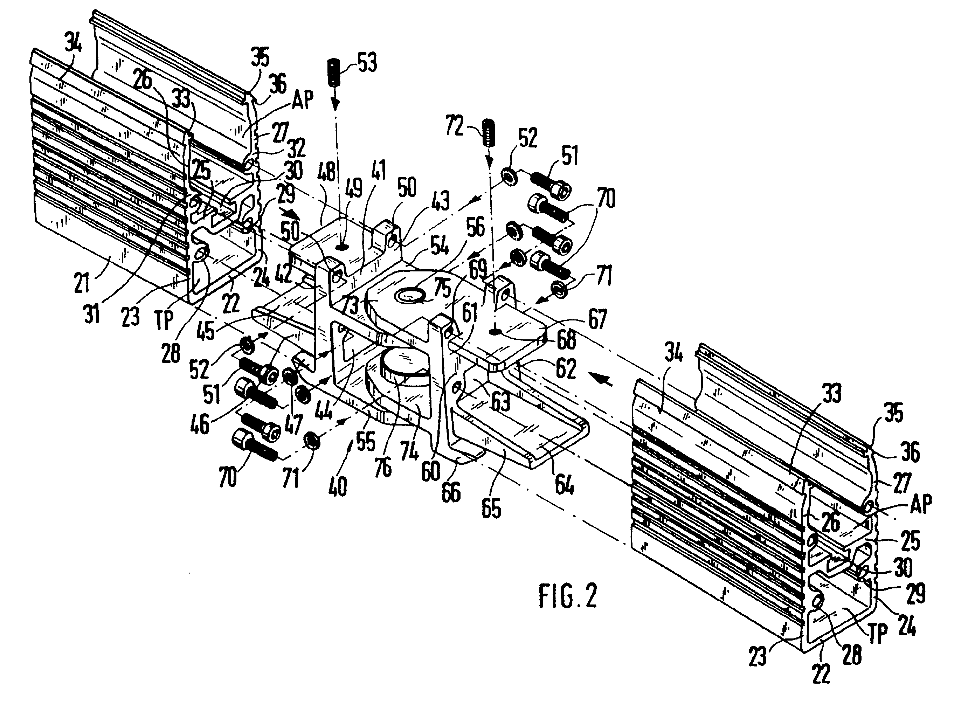

Um die Tragarmabschnitte 20 in verschiedenen Längen bereitstellen zu können, wird der Grund-Profilabschnitt 21 von einem entsprechenden Profilstrang in der erforderlichen Länge abgelängt. Der Grund-Profilabschnitt 21 ist im wesentlichen U-förmig, wobei sich an den Steg 22 die Seitenschenkelabschnitte 23 und 26 bzw. 24 und 27 anschließen, wie Fig. 2 zu entnehmen ist. Der Trennsteg 25, der parallel zum Steg 22 verläuft, unterteilt den Grund-Profilabschnitt 21 in das Tragteil TP und das Aufnahmeteil AP. Das Tragteil TP ist ein geschlossenes Hohlprofil aus dem Steg 22, den Seitenschenkelabschnitten 23 und 24 sowie dem Trennsteg 25. Das Aufnahmeteil AP wird durch den Trennsteg 25 und die Seitenschenkelabschnitte 26 und 27 gebildet. Es ist auf der dem Steg 22 abgekehrten Seite des Grund-Profilabschnittes 21 offen und dient als Aufnahme für die Verbindungsleitungen. Das Tragteil TP verleiht dem Grund-Profilabschnitt 21 eine ausgezeichnete Stabilität und das offene Aufnahmeteil AP erleichtert das Einbringen der Verbindungsleitungen. Die Seitenschenkelabschnitte 26 und 27 laufen in die Verbindungsenden 33 und 35 aus, die mit Hinterschnitten 34 und 36 versehen sind. Das Aufnahmeteil AP wird mittels des U-förmigen Deckelprofilabschnittes 37 verschlossen, dessen Seitenschenkel 38 und 38' mit einem Einhängeansatz 39 bzw. einem Rastansatz 39' versehen sind. Ist der Einhängeansatz 39 des Seitenschenkels 38 in den Hinterschnitt 34 des Verbindungsendes 33 des Seitenschenkelabschnittes 26 eingehängt, dann wird beim Aufrasten des Deckelprofilabschnittes 37 der Rastansatz 39' des Seitenschenkels 38' in den Hinterschnitt 36 im Verbindungsende 35 des Seitenschenkelabschnittes 27 einrasten. Der Deckelprofilabschnitt 37 kann aber durch Aufheben dieser Rastverbindung leicht wieder von dem Aufnahmeteil AP des Grund-Profilabschnittes 21 gelöst werden.

Die Verbindungsenden 33 und 35 sind gegenüber den Seitenschenkelabschnitten 26 und 27 so weit nach innen versetzt, daß der Deckelprofilabschnitt 37 mit den Außenwandungen seiner Seitenschenkel 38 und 38'' bündig mit den Außenwandungen der Seitenschenkelabschnitte 26 und 27 abschließt. Die Hinterschnitte 34 und 36 sind längsgerichtet und durchgehend. Der Deckelprofilabschnitt 37 hat ebenfalls einen längsgerichteten und durchgehenden Einhängeansatz 39 bzw. Rastansatz 39'.

An den Innenwandungen der Seitenschenkelabschnitte 23, 24, 26 und 27 sind längsgerichtete, durchgehende Verbindungsstege 28, 29, 31 und 32 mit Schraubaufnahmen angeformt. Die Schraubaufnahmen sind mittels durchgehender Schlitze geöffnet, so daß sie leicht entformt werden können. Die Breite der Schlitze ist so, daß sich die Schraubaufnahme über mehr als 180° ihres Umfanges, vorzugsweise über etwa 270°, erstreckt. Die Schlitze erleichtern das Herstellen des Grund-Profilabschnittes 21 im Strangpreßverfahren. Die Paare der Verbindungsstege 28 und 29 bzw. 31 und 32 im Tragteil TP bzw. Aufnahmeteil AP sind an den einander gegenüberliegenden Innenwandungen der Seitenschenkelabschnitte 23 und 24 bzw. 26 und 27 paarweise aufeinander ausgerichtet und die Mittellängsachsen der Schraubaufnahmen haben etwa gleichen Abstand zum Trennsteg 25. Mit Hilfe der Schraubaufnahmen läßt sich in einfacher Weise an die Stirnseiten des Grund-Profilabschnittes 21 ein weiteres Teil der Aufhängevorrichtung anschrauben.

Wie Fig. 2 zeigt, werden bei der horizontalen Ausrichtung der Tragarmabschnitte 20 die Grund-Profilabschnitte 21 so angeordnet, daß die Aufnahmeteile AP nach oben gerichtet und nach oben offen sind. Die beiden Gelenkteile des Zwischengelenkes 40 werden mit den Stirnseiten der Grund-Profilabschnitte 21 verschraubt. Das eine Gelenkteil weist die Befestigungsplatte 41 auf, bei der auf der Befestigungsseite die senkrecht abstehenden Führungsplatten 45 und 48 angeformt sind. Die Seiten der Führungsplatte 45 tragen rechtwinklig abstehende Abkantungen 46. Auf der Befestigungsseite der Befestigungsplatte 41 sind auch Stützansätze 47 angeformt, die den Steg 22 des zu verbindenden Grund-Profilabschnittes 21 auf der Außenwandung unterstützen, wenn die Führungsplatte 45 in das Tragteil TP und die Führungsplatte 48 in das Aufnahmeteil AP des Grund-Profilabschnittes 21 eingeführt werden. Dabei stützt sich das Führungsteil 45 auf der Innenwandung des Steges 22 und die Führungsplatte 48 in dem Aufnahmeteil AP auf dem Trennsteg 25 ab.

Die Befestigungsplatte 41 trägt Befestigungsbohrungen 50, die auf die Verteilung der Schraubaufnahmen in den Verbindungsstegen 28, 29, 31 und 32 ausgerichtet sind. Mit den Befestigungsschrauben 51 wird unter Zwischenlage der Scheiben 52 die Befestigungsplatte 41 mit der Stirnseite des Grund-Profilabschnittes verschraubt, wobei die Führungsplatten 45 und 48 sowie die Stützansätze 47 eine eindeutige Zuordnung zwischen dem Gelenkteil und dem Grund-Profilabschnitt 21 herstellen. Die Führungsplatte 48 ist als Stellplatte mit der Gewindebohrung 49 versehen, in die die Stellschraube 53 eingeschraubt wird. Die Befestigungsfläche der Befestigungsplatte 41 ist leicht geneigt und zwar so, daß ein zum offenen Aufnahmeteil AP hin eine Neigung von etwa 2° auftritt. Der Neigungswinkel von 2° wird zwischen der Stirnseite des Grund-Profilabschnittes 21 und der zugekehrten Befestigungsfläche der Befestigungsplatte 41 eingehalten.

Die Stellschraube 53 stützt sich auf dem Trennsteg 25 ab, so daß damit der Grund-Profilabschnitt 21 vor dem Festziehen der Befestigungsschrauben 53 an dem Gelenkteil ausgerichtet werden kann. Der über die Führungsplatte 48 vorstehende Teil der Befestigungsplatte 41 ist mittig ausgespart, so daß die aus dem Aufnahmeteil AP des Grund-Profilabschnittes 21 herausgeführten Verbindungsleitungen über das Zwischengelenk hinweg in das Aufnahmeteil AP des am anderen Gelenkteil befestigten Grund-Profilabschnittes 21 geführt werden können. Im Bereich des Tragteils TP ist die Befestigungsplatte 41 mit der Aussparung 44 versehen, so daß auch im Tragteil TP eingefädelte Verbindungsleitungen über das Gelenkteil des Zwischengelenkes 40 weitergeführt werden können.

Das andere Gelenkteil ist mit der Befestigungsplatte 60 und den Befestigungsbohrungen 69, der Führungsplatte 64 mit den Abkantungen 65, der als Stellplatte mit der Gewindebohrung 68 für die Stellschraube 72 versehenen Führungsplatte 67, der Aussparung 63 und den Stützansätzen 66 gleich ausgelegt wie das Gelenkteil mit der Befestigungsplatte 41 und den entsprechenden Teilen. Die Befestigungsschrauben 70 verbinden unter Zwischenlage der Scheiben 71 die Befestigungsplatte 60 an der Stirnseite des anderen Grund-Profilabschnittes 21. Die der Stirnseite des Grund-Profilabschnittes 21 zugekehrte Befestigungsfläche der Befestigungsplatte 60 ist wieder leicht geneigt, so daß mit der Stellschraube 72 die Ausrichtung des anderen Grund-Profilabschnittes 21 am anderen Gelenkteil in gleicher Weise vorgenommen werden kann.

Die beiden Gelenkteile sind auf den einander zugekehrten Seiten der Befestigungsplatten 41 und 60 gelenkig miteinander verbunden, wobei die Gelenkachse parallel zu den Befestigungsplatten 41 und 60 sowie senkrecht zu den Führungsplatten 45, 48, 64 und 67 verläuft. An jeder Befestigungsplatte 41 und 60 sind zwei im Abstand zueinander stehende Lagerlaschen 54 und 55 bzw. 73 und 74 angeformt, die parallel zu den Führungsplatten 45 und 48 bzw. 64 und 67 ausgerichtet sind. Bei dem einen Gelenkteil ist die obere Lagerlasche 54 um die Dicke der Lagerlasche 73 des anderen Gelenkteils in Richtung zum Tragteil TP des Grund-Profilabschnittes 21 abgesetzt, während beim anderen Gelenkteil die obere Lagerlasche 73 mit der Führungsplatte 67 in einer Ebene angordnet ist. Damit sind nach der Verbindung der Gelenkteile mit den Grund-Profilabschnitten 21 die als Stellplatten dienenden Führungsplatten 48 und 67 sowie die Lagerlasche 73 über den Trennstegen 25 angeordnet und ragen in die Aufnahmeteile AP. Es ist im Bereich über dem Zwischengelenk 40 zwischen den ausgesparten Teilen der Befestigungsplatten 41 und 60 genügend Platz zur Führung der Verbindungsleitungen.

Das zweite Paar von Lagerlaschen 55 und 74 ist im Bereich der Tragteile TP ebenfalls um die Dicke der Lagerlaschen gegeneinander versetzt. Das Lagerelement 76 verbindet dieses Paar von Lagerlaschen 55 und 74 drehbar, jedoch unlösbar, so daß das Zwischengelenk 40 eine Einheit darstellt. An der Lagerlasche 54 ist der Lagerbolzen 56 angeformt, der in der Lagerbohrung 75 der Lagerlasche 73 drehbar gelagert ist. Die beiden Gelenkteile sind begrenzt schwenkbar, bis die Befestigungsplatten 41 und 60 aneinander und/oder die Lagerlaschen 54 und 55 bzw. 73 und 74 an den Befestigungsplatten 41 und 60 zum Anschlag kommen. Der Schwenkwinkel beträgt mindestens 180°.

Sind die Verbindungsleitungen eingebracht, dann werden die Aufnahmeteile AP der Grund-Profilabschnitte 21 mittels der Deckelprofilabschnitte 37 verschlossen und die Tragarmabschnitte 20 vervollständigt. Das Zwischengelenk 40 wird mit einem Faltenbalg abgedeckt, wie Fig. 1 zeigt, der die Verbindungsleitungen schützt. Der Faltenbalg ist an den Enden der Tragarmabschnitte 20 befestigt und vorzugsweise mittels eines Reißverschlusses oder dgl. zu öffnen, um leichten Zugang zum Zwischengelenk 40 zu erhalten.

## Patentansprüche

1. Aufhängevorrichtung für Steuergeräte, die aus einem mit einer Wand (10) oder einem Maschinenkörper (10) verbindbaren Anschlußflansch (18) oder Anschlußdrehgelenk, Tragarmabschnitten (20), Winkeln (14), Zwischengelenken (11) und einer mit dem Steuergerät (17) verbindbaren Kupplung (15) zusammensetzbar ist, bei der die Tragarmabschnitte (20) aus einem im wesentlichen U-förmigen Grund-Profilabschnitt (21) und einem diesen verschließenden Deckelprofilabschnitt (37) bestehen, wobei der Grund-Profilabschnitt (21) mittels eines zu seinem Steg parallel verlaufenden Trennsteges (25) in ein als geschlossenes Hohlprofil ausgebildetes Tragteil (TP) und ein dem Steg (25) abgekehrt offenes Aufnahmeteil (AP) unterteilt ist, und bei der im Tragteil (TP) und im Aufnahmeteil (AP) längsgerichtete, durchgehende Verbindungsstege (28, 29, 31, 32) mit Schraubaufnahmen angeformt sind, dadurch gekennzeichnet, daß die Zwischengelenke (11, 40) aus zwei Befestigungsplatten (41, 60) bestehen, die zumindest den Querschnitt der Aufnahmeteile (AP) der Grund-Profilabschnitte (21) im wesentlichen frei lassen und mit Bohrungen (50, 69) für Befestigungsschrauben (51, 70) versehen sind, die auf die Verteilung der Schraubaufnahmen in den Verbindungsstegen (28, 29, 31, 32) der Grund-Profilabschnitte (21) der aufeinander stoßenden Tragarmabschnitte (20) ausgerichtet sind, daß an den den Stirnseiten des Grund-Profilabschnittes (21) zugekehrten Seiten der Befestigungsplatten (41, 60) senkrecht abstehende Führungsplatten (45, 48 ; 64, 67) angeformt sind, die in das Tragteil (TP) und das Aufnahmeteil (AP) der Grund-Profilabschnitte (21) einführbar sind und sich darin abstützen, daß an den einander zugekehrten Seiten der Befestigungsplatten (41, 60) jeweils zwei beabstandete Lagerlaschen (54, 55 bzw. 73, 74) senkrecht abstehend angeformt sind, die um die Dicke der Lagerlaschen (54, 55, 73, 74) gegeneinander versetzt und mit fluchtenden Lagerbohrungen (75) zur Aufnahme von Lagerbolzen (56) oder Lagerelementen (76) versehen sind, und daß das Zwischengelenk (11, 40) mittels eines Faltenbalges abgedeckt ist, der an den mittels Deckelprofilabschnitten (37) verschlossenen Grund-Profilabschnitten (21) der aufeinanderstoßenden Tragarmabschnitten (20) festgelegt ist.

2. Aufhängevorrichtung nach Anspruch 1, dadurch gekennzeichnet, daß sich jeweils eine Führungsplatte (45 bzw. 64) der Befestigungsplatten (41, 60) auf der Innenwandung des Steges (22) des zugekehrten Grund-Profilabschnittes (21) abstützt und mit seitlichen Abkantungen (46, 65) versehen ist, die sich an die Innenwandungen der Seitenschenkelabschnitte (23, 24) des Tragteils (TP) anlegen.

3. Aufhängevorrichtung nach Anspruch 1 oder 2, dadurch gekennzeichnet, daß sich jeweils eine Führungsplatte (48 bzw. 67) der Befestigungsplatten (41, 60) im Aufnahmeteil (AP) auf dem Trennsteg (25) des zugeordneten Grund-Profilabschnittes (21) als Stellplatte abstützt und mit einer Gewindebohrung (49, bzw. 68) für eine Stellschraube (53 bzw. 72) versehen ist, die sich auf dem Trennsteg (25) abstützt, und daß die den Stirnseiten der Grund-Profilabschnitte (21) zugekehrten Seiten der Befestigungsplatten (41, 60) leicht zur abgekehrten Seite derselben hin geneigt sind, wobei der Neigungswinkel zwischen der Stirnseite des Grund-Profilabschnittes (21) und der zugekehrten Befestigungsfläche der zugeordneten Befestigungsplatte (41, 60) jeweils zur offenen Seite des Aufnahmeteils (AP) des Tragarmabschnittes (20) hin offen ist.

4. Aufhängevorrichtung nach einem der Ansprüche 1 bis 3, dadurch gekennzeichnet, daß an den Befestigungsplatten (41, 60) auf der den Stirnseiten der Grund-Profilabschnitte (21) zugekehrten Seiten zusätzlich Stützansätze (47, 66) angeformt sind, auf denen sich die Stege (22) der Grund-Profilabschnitte (21) mit ihren Außenwandungen abstützen.

5. Aufhängevorrichtung nach einem der Ansprüche 1 bis 4, dadurch gekennzeichnet, daß zumindest ein Paar von Lagerlaschen (55, 74) mittels eines Lagerelementes (76) drehbar, jedoch unlösbar miteinander verbindbar bzw. verbunden sind.

6. Aufhängevorrichtung nach einem der Ansprüche 1 bis 5, dadurch gekennzeichnet, daß bei einem Paar von Lagerlaschen (54, 73) ein an der einen Lagerlasche (54) angeformter Lagerbolzen (56) in eine Lagerbohrung (75) der anderen Lagerlasche (73) eingeführt und darin drehbar gelagert ist.

7. Aufhängevorrichtung nach einem der Ansprüche 1 bis 6, dadurch gekennzeichnet, daß die Lagerlaschen (54, 55 bzw. 73, 74) parallel zu den Führungsplatten (45, 48 bzw. 64, 67) ausgerichtet sind.

8. Aufhängevorrichtung nach einem der Ansprüche 1 bis 7, dadurch gekennzeichnet, daß die über die als Stellplatten dienenden Führungsplatten (48, 67) vorstehenden Bereiche der Befestigungsplatten (41, 60) mittig ausgespart sind.

9. Aufhängevorrichtung nach einem der Ansprüche 1 bis 8, dadurch gekennzeichnet, daß bei einer Befestigungsplatte (60) die als Stellplatte dienende Führungsplatte (67) und die eine der beiden Lagerlaschen (73) in einer Ebene angeordnet sind und daß bei der anderen Befestigungsplatte (41) die als Stellplatte dienende Führungsplatte (48) in derselben Ebene angeordnet ist, während die der Lagerlasche (73) der einen Befestigungsplatte (60) zugeordnete Lagerlasche (54) um die Dicke der Lagerlasche (73) in Richtung zu dem im Bereich der Tragteile (TP) angeordneten Paar von Lagerlaschen (55, 74) versetzt ist.

10. Aufhängevorrichtung nach einem der Ansprüche 1 bis 9, dadurch gekennzeichnet, daß der lichte Abstand zwischen der in das Tragteil (TP) einführbaren Führungsplatte (45 bzw. 64) und den Stützansätzen (47 bzw. 66) der Dicke des Steges (22) des Grund-Profilabschnittes (21) entspricht.

11. Aufhängevorrichtung nach einem der Ansprüche 1 bis 10, dadurch gekennzeichnet, daß die Befestigungsplatten (41, 60) zwischen den beiden Lagerlaschen (54, 55 bzw. 73, 74) mit einer mittigen Aussparung (44 bzw. 63) versehen sind, die auf den Aufnahmeraum des Tragteils (TP) des Grund-Profilabschnittes (21) ausgerichtet ist.

12. Aufhängevorrichtung nach einem der Ansprüche 1 bis 11, dadurch gekennzeichnet, daß jeweils eine Befestigungsplatte (41 bzw. 60) mit den angeformten Führungsplatten (45, 48 bzw. 64, 67), Stützansätzen (47 bzw. 66) und Lagerlaschen (54, 55 bzw. 73, 74) ein Gelenkteil bilden, das als Metall-Gußteil oder Metall-Spritzgußteil hergestellt ist.

**Claims**

1. A suspension arrangement for control appliances and which can be assembled from, adapted to be connected to a well (10) or the body (10) of a machine, a connecting flange (18) or connecting swivel joint, support arm portions (20), angles (14), intermediate joints (11) and a coupling (16) which can be connected to the control appliance (17), and in which the support arm portions (20) consist of a substantially U-shaped basic profile portion (21) and cover profile portions (37) which occludes this latter, the basic profile portion (21) being sub-divided by a separating web (25) extending parallel with its web into a supporting part (TP) which is constructed as a closed hollow profile and a U-shaped housing pat (AP) which is open at the end opposite the web (25), and in which elongated continuous connecting webs (28, 29, 31, 32) with screw housings are integrally formed in the supporting part (TP) and in the housing part (AP), characterised in that the intermediate joints (11, 40) consist of two fixing plates (41, 60) which leave substantially free at least the cross-section of the housing parts (AP) of the basic profile sections (21) and which are provided with bores (50, 69) for fixing screws (51, 70) which are orientated at the distribution of the screw housings in the connecting webs (28, 29, 31, 32) of the basic profile portions (21) of the mutually abutting support arm portions (20) and in that there are integrally formed on those sides of the fixing plates (41, 60) which are towards the end faces of the basic profile portions (21) perpendicularly projecting guide plates (45, 48 ; 64, 67) which can be introduced into the support part (TP) and the housing part (AP) of the basic profile portions (21) and can be supported therein and in that on the mutually facing sides of the fixing plates (41, 60) there are in each case two spaced apart perpendicularly projecting bearing lugs (54, 55 and 73, 74) which are offset to one another by the thickness of the bearing lugs (54, 55 ; 73, 74) and which are provided with aligned bearing bores (75) to receive bearing journals (56) or bearing elements (57) and in that the intermediate joint (11, 40) is covered by a bellows unit which is fixed on the basic profile portions (21) of the mutually abutting support arm portions (20) which are occluded by means of covering profile portions (37).

2. A suspension arrangement according to claim 1, characterised in that in each case one guide plate (45 or 64) of the fixing plates (41, 60) should be supported on the inside wall of the web (22) of the facing basic profile portion (21) and is provided with lateral canted portions (46, 65) which bear on the inside walls of the side arm portions (23, 24) of the support part (TP).

3. A suspension arrangement according to claim 1 or 2, characterised in that in each case one guide plate (48 or 67) of the fixing plates (41, 60) should be supported in the housing part (AP) on the separating web (25) of the associated basic profile portion (21) as a positioning plate and should be provided with a screwthreaded bore (49 or 68) for an adjusting screw (53 or 72) which is supported on this separating web (25) and in that the sides of the fixing plates (41, 60) which are towards the end faces of the basic profile portions (21) are inclined slightly towards the reverse side hereof, the angle of inclination between the end face of the basic profile portion (21) and the facing fixing surface of the associated fixing plate (41, 60) being in each case open towards the open side of the housing part (AP) of the support arm portion (20).

4. A suspension arrangement according to one of claims 1 to 3, characterised in that on the fixing plates (41, 60) on the sides facing the end faces of the basic profile portions (21) there are integrally formed additional supporting projections (47, 66) on which the outside walls of the web (22) of the basic profile portions (21) are supported.

5. A suspension arrangement according to one of claims 1 to 4, characterised in that at least one pair of bearing lugs (55, 74) are rotatably but inseparably connected or connectable to one another by means of a bearing element (76).

6. A suspension arrangement according to one of claims 1 to 5, characterised in that in the case of one pair of bearing lugs (54, 73) a bearing journal (56) integrally formed on one bearing lug (54) is introduced into and is rotatably mounted in a bearing bore (75) in the other bearing lug (73).

7. A suspension arrangement according to one of claims 1 to 6, characterised in that the bearing lugs (54, 55 or 73, 74) are orientated parallel with the guide plates (45, 48 or 64, 67).

8. A suspension arrangement according to one of claims 1 to 7, characterised in that the areas of the fixing plates (41, 60) which project beyond the guide plates (48, 67) which serve as positioning plates are centrally recessed.

9. A suspension arrangement according to one of claims 1 to 8, characterised in that in the case of one fixing plate (60), the guide plate (67) which serves as a positioning plate and one of the two bearing lugs (73) are disposed in one plane and in that in the case of the other fixing plate (41) the guide plate (48) which serves as a positioning plate is disposed in the same plane while the bearing lug (54) associated with the bearing lug (73) of one fixing plate (60) is offset by the thickness of the bearing lug (73) in the direction of the pair of bearing lugs (55, 74) disposed in the region of the support parts (TP).

10. A suspension arrangement according to one of claims 1 to 9, characterised in that the clear gap between the guide plate (45 or 64) which can be introduced into the support part (TP) and the supporting projections (47 or 66) corresponds to the thickness of the web (22) of the basic profile portion (21).

11. A suspension arrangement according to one of claims 1 to 10, characterised in that the fixing plates (41, 60) are, between the two bearing lugs (54, 55 and 73, 74) provided with a central recess (44, 63) which is orientated at the housing space of the support part (TP) of the basic profile portion (21).

12. A suspension arrangement according to one of claims 1 to 11, characterised in that in each case one fixing plate (41 or 60) with the integrally formed guide plates (45, 48 or 64, 67), supporting projections (47 or 66) and bearing lugs (54, 55 or 73, 74) form a joint part which is produced as a metal casting or as a metal injection moulding.

**Revendications**

1. Dispositif de suspension pour appareils de commande, susceptible d'être composé d'une bride de raccordement (18) ou d'une articulation de rotation de raccordement, susceptible d'être reliée à une paroi (10) ou à un corps de machine (10), de sections de bras support (20), de renvois d'angle (14), d'articulations intermédiaires (11) et d'un accouplement (15) susceptible d'être relié à l'appareil de commande (17), dans lequel les sections de bras support (20) se composent d'une section de profilé de base (21) sensiblement en forme de U et d'une section de profilé de couvercle (37) qui la ferme, la section de profilé de base (21) étant subdivisée, au moyen d'une nervure de séparation (25) s'étendant parallèlement à son âme, en une partie de support (TP), réalisée sous forme de profilé creux fermé, et une partie de logement (AP), ouverte à l'opposé de l'âme (25), et dans lequel des nervures de liaison (28, 29, 31, 32) continues, orientées longitudinalement dans la partie de support (TP) et dans la partie de logement (AP) sont formées d'un seul tenant, avec des logements à vis, caractérisé en ce que les articulations intermédiaires (11, 40) se composent de deux plaques de fixation (41, 60), laissant libre essentiellement au moins la section transversale des parties de logement (AP) des sections de profilé de base (21) et pourvues de perçages (50, 69) pour des vis de fixation (51, 70), orientées en suivant la répartition des logements de vis ménagés dans les nervures de liaison (28, 29, 31, 32) des sections de profilé de base (21) des sections de bras support (20) venant en contact entre elles, que des plaques de guidage (45, 48 ; 64, 67) faisant saillie perpendiculairement sont formées d'un seul tenant sur les faces, tournées vers les surfaces frontales de la section de profilé de base (21), des plaques de fixation (41, 60) et sont susceptible d'être introduites dans la partie de support (TP) et la partie de logement (AP) des sections de profilé de base (21) et d'y prendre appui, que sur chacune des faces, tournées l'une vers l'autre, des plaques de fixation (41, 60) sont formées d'un seul tenant deux attaches de palier (54, 55, respectivement 73, 74), qui font saillie perpendiculairement et sont mutuellement décalées de la valeur de l'épaisseur des attaches de palier (54, 55, 73, 74) et pourvues d'alésages de palier (75) alignés pour recevoir des boulons de palier (56) ou des éléments de palier (76), et que l'articulation intermédiaire (11, 40) est recouverte au moyen d'un soufflet fixé sur les sections de profilé de base (21), obturées par les sections de profilé de couvercle (37), des sections de bras support (20) placées l'une contre l'autre.

2. Dispositif de suspension selon la revendication 1, caractérisé en ce qu'une plaque de guidage (45 respectivement 64) de chacune des plaques de fixation (41, 60) prend appui sur la paroi intérieure de la nervure (22) de la section de profilé de base (21) tournée vers elle et est pourvue de plis latéraux (46, 65) qui appuient sur les parois intérieures des sections d'ailes latérales (23, 24) de la partie de support (TP).

3. Dispositif de suspension selon la revendication 1 ou 2, caractérisé en ce qu'une plaque de guidage (48, respectivement 67) de chacune des plaques de fixation (41, 60) prend appui, dans la partie de logement (AP) sur la nervure de séparation (25) de la section de profilé de base (21) associée, à titre de plaque de réglage, et est pourvue d'un trou taraudé (49, respectivement 68) pour recevoir une vis de réglage (53, respectivement 72), qui prend appui sur la nervure de séparation (25), et que les faces, tournées vers les faces frontales des sections de profilé de base (21), des plaques de fixation (41, 60) sont légèrement inclinées vers la face opposée de ces dernières, l'angle d'inclinaison, entre la face frontale de la section de profilé de base (21) et la surface de fixation tournés vers elle de la plaque de fixation (41, 60) associée, étant chaque fois ouvert vers la face ouverte de la partie de logement (AP) de la section de bras support (20).

4. Dispositif de suspension selon l'une des revendications 1 à 3, caractérisé en ce que des appendices d'appui (47, 66) supplémentaires, sur lesquels les nervures (22) des sections de profilé de base (21) prennent appui avec leurs parois extérieures, sont formés d'un seul tenant sur les plaques de fixation (41, 60), sur les faces tournées vers les faces frontales des sections de profilé de base (21).

5. Dispositif de suspension selon l'une des revendications 1 à 4, caractérisé en ce qu'au moins deux attaches de palier (55, 74) peuvent être reliées ou sont reliées entre elles à rotation, mais de façon indémontable, au moyen d'un élément de palier (76).

6. Dispositif de suspension selon l'une des revendications 1 à 5, caractérisé en ce que, dans le cas de deux attaches de palier (54, 73), un boulon de palier (56), formé d'un seul tenant sur une attache de palier (54), est introduit dans un alésage de palier (75) de l'autre attache de palier (73) et monté à rotation à l'intérieur.

7. Dispositif de suspension selon l'une des. revendications 1 à 6, caractérisé en ce que les attaches de palier (54, 55, respectivement 73, 74) sont orientées parallèlement aux plaques de guidage (45, 48, respectivement 64, 67).

8. Dispositif de suspension selon l'une des revendications 1 à 7, caractérisé en ce que les zones des plaques de fixation (41, 60) qui font saillie sur les plaques de guidage (48, 67) servant de plaques de réglage sont évidées au centre.

9. Dispositif de suspension selon l'une des revendications 1 à 8, caractérisé en ce que, pour la première plaque de fixation (60), la plaque de guidage (67) qui sert de plaque de réglage et l'une des deux attaches de palier (73) sont disposés dans le même plan et que, pour la deuxième plaque de fixation (41), la plaque de guidage (48) qui sert de plaque de réglage et disposée dans le même plan, tandis que l'attache de palier (54) associée à l'attache de palier (73) de la première plaque de fixation (60) est décalée, de la valeur de l'épaisseur de l'attache de palier (73), en direction du couple d'attaches de palier (55, 74) disposé dans la zone des parties de support (TP).

10. Dispositif de suspension selon l'une des revendications 1 à 9, caractérisé en ce que la distance libre, entre la plaque de guidage (45, respectivement 64) susceptible d'être introduite dans la partie de support (TP) et les appendices d'appui (47, respectivement 66), correspond à l'épaisseur de la nervure (22) de la section de profilé de base (21).

11. Dispositif de suspension selon l'une des revendications 1 à 10, caractérisé en ce que les plaques de fixation (41, 60) sont pourvues, entre les deux attaches de palier (54, 55, respectivement 73, 74), d'un évidement central (44, respectivement 63), qui est aligné avec l'espace de logement de la partie de support (TP) de la section de profilé de base (21).

12. Dispositif de suspension selon l'une des revendications 1 à 11, caractérisé en ce que chaque plaque de fixation (41, respectivement 60) forme, avec les plaques de guidage (45, 48, respectivement 64, 67), les appendices d'appui (47, respectivement 66) et les attaches de palier (54, 55, respectivement 73, 74) une pièce articulée, fabriquée sous forme de pièce métallique coulée ou de pièce métallique moulée par injection.

FIG.1

FIG. 2